Europäisches Patentamt

(19) European Patent Office

Office européen des brevets

(11) Publication number: **0 000 139**
B1

(12) **EUROPEAN PATENT SPECIFICATION**

(45) Date of publication of patent specification: **11.11.81**

(21) Application number: **78100142.5**

(22) Date of filing: **13.06.78**

(51) Int. Cl.³: **G 03 B 41/18,**
**G 03 D 13/00**

(54) Unloader for an X-ray film-holding cassette.

(30) Priority: **13.06.77 US 805816**

(43) Date of publication of application:
**10.01.79 Bulletin 79/1**

(45) Publication of the grant of the European patent:
**11.11.81 Bulletin 81/45**

(84) Designated Contracting States:
**BE DE FR GB**

(56) References cited:
**FR - A - 2 277 369**
**FR - A - 2 332 553**
**FR - A - 2 320 575**
**US - A 3 829 946**

(73) Proprietor: **E.I. DU PONT DE NEMOURS AND COMPANY**
**Legal Department 1007 Market Street**
**Wilmington, Delaware 19898 (US)**

(72) Inventor: **Schmidt, Gunter**
**20645 Eagle Pass Drive**
**Malibu, California 90265 (US)**

(74) Representative: **Abitz, Walter, Dr.-Ing. et al,**
**Abitz, Morf, Gritschneder P.O. Box 86 01 09**
**D-8000 München 86 (DE)**

Courier Press, Leamington Spa, England.

## Unloader for an X-ray film-holding cassette

The invention relates to an unloader for an X-ray film-holding cassette which has a first wall and a second wall pivotally joined at one end and held together at the other end by at least one latch which can be pushed in to release the walls so that they can pivot apart so that an exposed X-ray film can drop out of the cassette. Such cassettes permit an undeveloped film sheet to be handled in a daylight environment, as when bringing the film to a chest X-ray unit for exposure or when carrying the exposed film to a processor.

Although the use of a cassette has facilitated movement of the undeveloped film, it has usually been necessary to carry the cassette containing the exposed film to a darkroom for removal and placement of the film in a processing machine which develops it.

U.S. Patent 3,829,947 shows a unloader in which such a cassette is loaded into a housing through an opened cover and is stopped from further advancement by a retainer. When the cover is closed the retainer is rotated upwards and allows the cassette to be advanced onto a fixed release member which unlatches the cassette and allows the film to drop out. Unloading of a cassette by this unloader requires at least three manipulations. There is also the danger of an inadvertent opening of the cassette because the retainer is rotated upwards already when the part of the cover next to the hinge of the cover engages the retainer and before complete closure of the cover.

The invention solves the problem of how to design an unloader which is of simple construction and requires less manipulation. The unloader of the invention includes a housing with guides that slidably receive a cassette, and with pins or release members between the ends of the guides for engaging corresponding latches on the cassette to open it. The guides extend at an angle from the vertical, so that the cassette tends to swing open when unlatched, and the film will then drop out.

The housing includes an upper opening, through which the cassette is received, and a cover that can be pivoted over the opening. A spring biased retainer holds the cassette slightly above the pins, to prevent opening of the cassette while the cover is open. As the cover is swung closed, it pushes down against the cassette to engage the pins, so that the cassette opens only when the housing is sealed from light. A plurality of guides are provided for receiving cassettes of different sizes. The pins at the ends of the different guides are positioned so that the upper end of the cassette lies slightly above the cover level when the bottom of the cassette is close to the pins, so that closing of the cover will push down and cause unlatching of the cassette held by any of the guides.

## Description of Drawings

Figure 1 is a perspective view of an unloader constructed in accordance with the present invention, and of a cassette which fits therein, with a portion of the unloader housing being cut away.

Figure 2 is a perspective view of the cassette of Figure 1, showing the latchable ends of the cassette in a slightly opened condition.

Figure 3 is a partion sectional view taken on the line 3—3 of Figure 1, but with the cover in an almost closed condition.

Figure 4 is a view similar to Figure 3, but showing the cover fully closed and the cassette opened.

Figure 5 is a partial view taken on the line 5—5 of Figure 4, but showing the cassette partially inserted in the unloader.

Figure 6 is a view taken on the line 6—6 of Figure 5.

Figure 7 is a view taken on the line 7—7 of Figure 5.

## Description of Apparatus

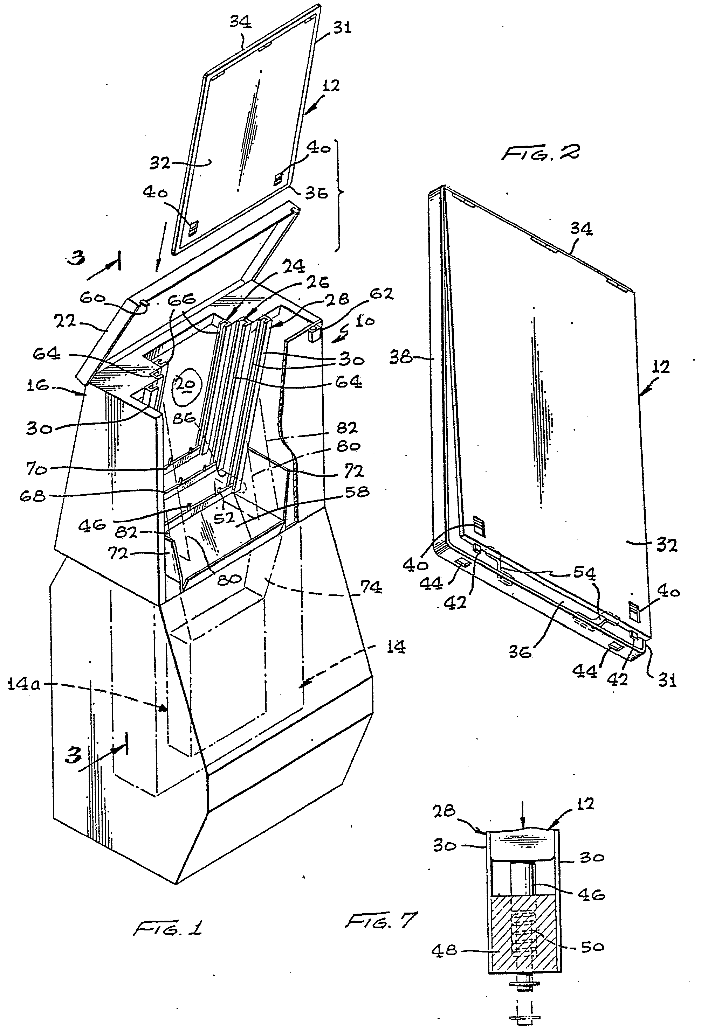

Fig. 1 illustrates a cassette unloader 10 which can receive a cassette 12, wherein the cassette 12 is closed and contains a sheet of exposed X-ray film. The unloader 10 can open the cassette 12 while holding it at an angle from the vertical, to allow the film therein to fall out, and can funnel the film to a processor 14, all without exposing the film to light in spite of the unloader 10 lying in a daylight environment.

The unloader 10 includes a housing 16 with a bottom that rests on processor 14 and a top forming an opening 20 through which cassettes 12 are received. After a cassette 12 has been received, a cover 22 can be closed to make the housing 16 lighttight. A group of guide assemblies 24, 26 and 28 are provided for receiving cassettes of different sizes. The particular cassette 12 is designed to be received between a pair of guides 30 of the guide assembly 28.

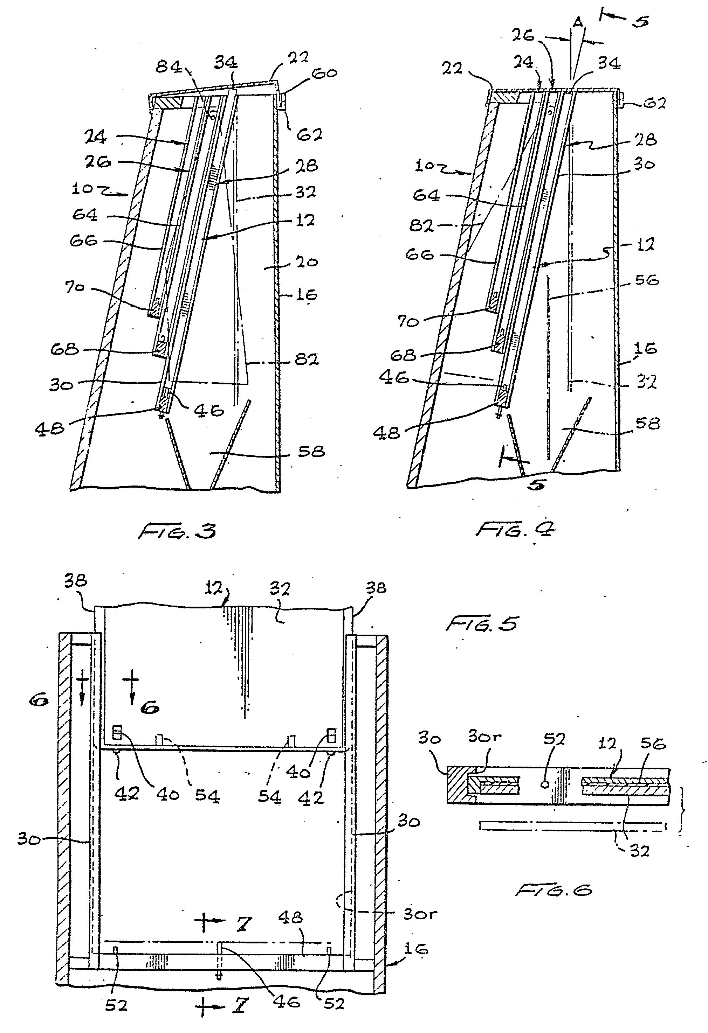

The cassette 12 includes a pair of walls 31, 32 that are pivotally joined at one end 34 of the cassette 12 and which are latched together at an opposite end 36 of the cassette 12. As shown in greater detail in Fig. 2, the base wall 31 includes a peripheral lip 38 that surrounds the cover wall 32 when the cassette 12 is closed. Cover wall 32 includes a pair of latches 40 that are spring biased so that their ends 42 tend to project from the cover wall 32 and through corresponding holes 44 in the lip 38 of the base wall 31, when the cassette 12 is closed. The latches 40 can, however, be retracted to withdraw their ends 42, for opening or closing of the cassette 12. The unloader 10 is constructed to automatically operate the latches 40 to open the cassette 12 after it is inserted in the unloader 10.

When the cassette 12 is inserted between the guides 30, as indicated in Figs. 1 and 5, the cassette 12 moves down until it encounters a spring-loaded retainer 46 which projects from a bar 48 connecting the lower ends of the guides 30. When downward force is applied to the cassette 12, it presses down the retainer 46 against the force of a spring 50 (Fig. 7), so that the cassette 12 can approach and engage a pair of release members or pins 52.

The pins 52 are located so that they will fit into the holes 44 (Fig. 2) of the cassette 12 to push against the ends 42 of the cassette latches 40. Thus, as the cassette 12 is forced down, the pins 52 force the retraction of the latches 40 to release the cover wall 32. A pair of leaf springs 54 are located within the cassette 12 to initially push apart the walls 31, 32 to begin the opening of the cassette 12. The leaf springs 54 also lie behind the lower edge of the film 56, so they push out the lower film edge as the cassette 12 opens.

As shown in Fig. 4, the guides 30 are inclined by an angle A from the vertical. As a result, when the cassette latches 40 are releases and the cover wall 32 of the cassette 12 moves slightly open, gravity pulls the cover wall 32 to a more open position. With the cassette 12 opened and oriented at an incline, the film 56 (whose lower edge is pushed out by the leaf springs 54 in the cassette) is able to fall out of the cassette and into the processor 14 located below a funnel 58. It may be noted that the cassette 12 must be inserted so that the cover wall 32 faces downwardly. As shown in Figs. 5 and 6, the guides 30 have shallow grooves 30r so that they hold only the lip 38 of the base wall 31 of the cassette 12, but not the cover wall 32. Thus, the cover wall 32 is free to swing open when unlatched.

When the cassette 12 is initially inserted through the opening 20 at the top of the unloader housing 16 the cassette 12 is exposed to light entering through the opening 20. It is important that the cover 22 be closed sufficiently to keep out light, at the time when the cassette 12 is unlatched to open, and it is desirable that the cassette 12 then open automatically. To accomplish this, the cover 22 is utilized in the manner illustrated in Figs. 3 and 4, to push down the cassette 12, and to open it immediately after the cover 22 is moved to a position wherein it closes sufficiently to keep out light. As discussed above, the inserted cassette 12 initially rests on the retainer 46. When the cassette 12 rests on the retainer 46, as in Fig. 3, its upper end 34 projects into the path of the cover 22. With the cover 22 lying lightly on the upper end 34 of the cassette 12, it is sufficiently closed to prevent the entrance of light into the unloader 10 but the opening 20 is not yet fully closed. The technician can fully close the opening 20 by applying downward force to the cover 22, until holder members 60 on the cover 22 engage catches 62 on the side walls of the housing 16 to keep the cover 22 fully closed. While the cover 22 is being fully closed, it pushes down the cassette 12 against the biasing of retainer 46, until the cassette 12 against the biasing of retainer 46, until the cassette latches 40 engage the pins 52. The pins 52 then depress the latch ends of the cassette 12, to cause opening of the cassette 12 and release of the X-ray film 56.

As mentioned above, the unloader 10 includes two guide assemblies 24, 26 (Fig. 1), in addition to the guide assembly 28 with guides 30, to enable the unloading of two other sizes of cassettes. The other two cassette sizes are of smaller length and narrower width than the cassette 12. Accordingly, the pair of guides 64 and 66 of each of the other guide assemblies 26, 28 are closer together, and the bars 68, 70 are at a greater height than the bar 48 which holds the retainer 46 and the pins 52. The other bars 68, 70 hold corresponding pins and retainers, at levels such that when cassettes of corresponding sizes are first inserted, and lie on their respective spring-biased retainers, their upper ends lie in the path of the cover 22. Accordingly, full closure of the cover 22 will push down and cause opening of cassettes of any one of the three sizes provided for. The funnel 58 is made wide enough to receive films dropping from any of the three guide assemblies 24, 26, 28. It also may be noted that side funnel plates 72 are provided to deflect the films toward the funnel 58 and to enable their passage through the funnel 58, and that a processor such as 14a, designed to receive a small film sheet from a small cassette, may be provided with additional side funnel plates 74 to accurately guide these small sheets into the corresponding processor 14a.

Although the use of pins or release members 52 fixed on bars 48, 68, 70 and of the housing cover 22 to press the pins 52 into a cassette provides a simple mechanism, other arrangements can be utilized.

As mentioned above, side funnel plates 72 (Fig. 1) deflect the films 56 towards the funnel 58. These plates 72 prevent tumbling of large films 56 exiting from large cassettes 12 on the guide assembly 28. In order to prevent tumbling of films exiting from smaller cassettes on the guide assemblies 24, 26, two pairs of edge guides 80, 82 are provided. The pair of edge guides 82 are pivotally mounted on the outside of grooved guides 64 of the guide assembly 26. These edge guides 82 can guide the edges of a film exiting from a cassette on the guides 64.

In order to allow the edge guides 82 to effectively guide a film, the edge guides 82 must extend through the space between the pair of guides 30, as shown in Fig. 3. The edge guides 82 tend to assume this position when free to pivot thereto by gravity. When a large cassette 12 is received between the guides 30, as shown in Fig. 4, the large cassette 12 will deflect the edge guides 82 out of the way of the cassette 12, and out of the way of a film 56 falling from the cassette 12. In a similar manner the edge guides 80 (Fig. 1) lying between pairs of guides 64, 66, will be deflected by a medium cassette on guide assembly 26, and will be partially deflected by a large cassette on guide assembly 26. It may be noted that the edge guides 80 have slots 86 to avoid engagement with bar 68 on the guide assembly 26.

Thus, the invention provides a relatively simple apparatus for removing a sheet of X-ray film 56 from a cassette by an operator located in a daylight environment. This is accomplished by utilizing a lighttight housing with a guide for receiving the cassette in the housing 16 and with pins 52, or release members, positioned in the housing 16 to engage the latches 40 on the cassette to release them when the cassette has been inserted into the housing. Closing of the housing 16 to make it lighttight, and also to aid in pushing the cassette against the pins 52, is enabled by the use of a cover 22. The cover 22 moves close enough to its fully closed position to keep the housing 16 lighttight at a time when it pushes the cassette against the release pins 52, so that the cassette opens in a dark environment. A biased retainer 46 holds the cassette from fully engaging the pins 52 until pushed down by the cover 22. The guides hold the cover wall 32 at an angle, so that once it is unlatched it swings open to allow the film to drop out therefrom and into a funnel 58 leading to processor 14. A series of closely spaced guides 30, 64, 66 can be utilized to hold cassettes of a plurality of different sizes in a compact unloader 10. The guides 30, 64, 66 can be positioned so that each cassette size is pushed against its respective pin by the cover 22 approaching its fully closed position and so housing 16 is lighttight. Film edge guides 80, 82 can be provided that guide the exiting film 56 through the space at which larger cassettes can be received, and with the edge guides 80, 82 being deflected out of the way by the larger cassettes.

## Claims

1. An unloader for an X-ray film-holding cassette (12) which has a first wall (31) and a second wall (32) pivotally joined at one end (34) and held together at the other end (36) by at least one latch (40) which can be pushed into release the walls (31, 32) so that they can pivot apart, said unloader comprising: a housing (16) with an opening (20) through which a cassette (12) is received and with a cover (22) for closing the opening (20); at least one pair of parallel guides (30) spaced apart for slidably holding opposite sides of the first wall (31) of said cassette (12); a release member (52) fixedly positioned in said housing (16) to engage the latch (40) on a cassette (12) held by said guides (30), whereby to release the second wall (32); a retainer (46) biased to a position in the path of a cassette (12) held by said guides (30) to hold the cassette out of engagement with the release member (52), characterized in that the guides (30) are disposed to hold the cassette (12) inclined at an acute angle to the vertical with its second wall (32) under the first wall (31), and in that said cover (22) and said retainer (46) are positioned so that when the retainer (46) initially engages said cassette (12) said cover (22) is not completely closed but can lie against the one end (34) of the cassette (12), and as the cover (22) approaches a fully closed position it pushes the leading edge of the cassette (12) against the bias of the retainer (46) and the cassette latch (40) against the release member (52).

2. The unloader as claimed in claim 1 characterized in that said guides (30) contain a first pair of spaced grooves (30 r) for slidably holding said cassette (12); and by second guides (64) containing a second pair of grooves spaced apart by a distance less than the spacing of said first grooves and being shorter than the first grooves and extending parallel thereto to hold a cassette which is shorter and narrower than a cassette designed to fit between said first pair of grooves but which has a similar latch; in that said release member (52) lies between the end of said first guides (30); and by a second release member (52) lying between the ends of said second guides (64) and at a distance from said cover (22) so that as said cover (22) approaches a fully closed position it pushes the latch (40) of a cassette against said second release member (52).

3. The unloader as claimed in claim 2 characterized by a film-receiving funnel (58) under said first and second guides (30, 64) for receiving a film falling out of a cassette on said first of second guides (30, 64); by a pair of film edge guides (82) lying at either side of said second guides (64) to guide a film from a cassette (12) therein to said film-receiving funnel (58); and in that said edge guides (82) are pivotable between first positions wherein they lie between said first guides (30) and second positions wherein said portions lie out of a position between said first guides (30).

## Patentansprüche

1. Entladevorrichtung für eine Röntgenfilmkassette (12), die eine erste Wand (31) und eine zweite Wand (32) aufweist, die an einem Ende (34) gelenkig verbunden sind und an dem anderen Ende (36) durch wenigstens einen Riegel (40) zusammengehalten werden, der eingedrückt werden kann, um die Wände (31, 32) freizugeben, so dass sie sich voneinander wegdrehen können, wobei die Entladevorrichtung aufweist: ein Gehäuse (16) mit einer Öffnung (20), durch die eine Kassette (12) aufgenommen wird und mit einer Abdeckung (22) zum Verschliessen der Öffnung (20); wenigstens

7 ·                    0 000 139                    8

zwei parallele Führungen (30), die voneinander beabstandet sind, um gegenüberliegende Seiten der ersten Wand (31) der Kassette (12) gleitend zu halten; ein Freigabeelement (52), das in dem Gehäuse (16) starr angeordnet ist, um an dem Riegel (40) einer Kassette (12) anzugreifen, die durch die Führungen (30) gehalten wird, wodurch die zweite Wand (32) freigegeben wird; eine Rückhalteeinrichtung (46), die in eine Stellung in der Bahn einer durch die Führungen (30) gehaltenen Kassette vorgespannt ist, um die Kassette ausser Eingriff mit dem Beigabeelement (52) zu halten, dadurch gekennzeichnet, dass die Führungen (30) so angeordnet sind, dass sie die Kassette (12) unter einem spitzen Winkel zur Vertikalen halten, wobei sich ihre zweite Wand (32) unterhalb der ersten Wand (31) befindet, und dass die Abdeckung (22) und die Rückhalteeinrichtung (46) so angeordnet sind, dass die Abdeckung (22) nicht vollständig geschlossen ist, wenn die Rückhalteeinrichtung (46) beginnt, an der Kassette (12) anzugreifen, sondern an dem einen Ende (34) der Kassette (12) anliegen kann und das vordere Ende der Kassette (12) entgegen die Vorspannung der Rückhalteeinrichtung (46) und den Kassettenriegel (40) gegen die Rückhalteeinrichtung (52) drückt, wenn die Abdeckung (22) eine vollständig geschlossene Stellung einnimmt. ·

2. Entladevorrichtung wie in Anspruch 1 beansprucht, dadurch gekennzeichnet, dass die Führungen (30) ein erstes Paar beabstandeter Nuten (30 r) zur gleitenden Aufnahme der Kassette (12) aufweist, dass zweite Führungen (64) ein zweites paar von Nuten aufweisen, die voneinander einen kleineren Abstand als den Abstand der ersten Nuten aufweisen und kürzer sind als die ersten Nuten und sich parallel zu diesen erstrecken, um eine Kassette, die kürzer und schmäler ist als eine Kassette, die zur Aufnahme zwischen dem ersten Paar von Nuten ausgebildet ist, aufzunehmen, die jedoch einen ähnlichen Riegel aufweist; dass das Freigabeelement (52) zwischen den Enden der ersten Führungen (30) liegt und dass ein zweites Friegabeelement (52) zwischen den Enden der zweiten Führungen (64) und in einem Abstand von der Abdeckung (22) liegt, so dass es den Riegel (40) einer Kassette gegen das zweite Freigabeelement (52) drückt, wenn die Abdeckung (22) eine vollständig geschlossene Position erreicht.

3. Entladevorrichtung, wie in Anspruch 2 beansprucht, gekennzeichnet durch eine Filmaufnahmetrichter (58) unterhalb der ersten und zweiten Führungen (30, 64) zur Aufnahme eines Filmes, der aus einer Kassette in den ersten oder zweiten Führungen (30, 64) fällt, durch zwei Filmrand-Führungen (82), die zu beiden Seiten der zweiten Führungen (64) liegen, um einen Film von einer darin befindlichen Kassette (12) zu dem Filmaufnahmetrichter (58) zu führen und dadurch, dass die Seitenführungen (32) zwischen einer ersten Position, in der sie zwischen den ersten Führungen (30) liegen und einer zweiten Position, in der diese Bereiche ausserhalb einer Position zwischen den ersten Führungen (30) liegen, verschwenkbar sind.

**Revendications**

1. Dispositif de déchargement.pour cassette (12) de pellicule radiographique comportant une première paroi (31) et une deuxième paroi (32) mutuellement articulées à une première extrémité (34) et maintenues réunies à l'autre extrémité (36) par au moins un verrou (40) pouvant être poussé vers l'intérieur pour libérer les parois (31, 32) de façon à leur permettre de s'écarter l'une de l'autre par pivotement, ledit dispositif de déchargement comportant un boîtier (16) pourvu d'une ouverture (20)· par laquelle est reçue une cassette (12) et d'un couvercle (22) permettant de fermer ladite ouverture (20), au moins une paire de guides parallèles (30) mutuellement espacés de façon à retenir à coulissement des côtés opposés de la première paroi (31) de ladite cassette (12), un organe de libération (52) monté fixe dans ledit boîtier (16) de façon à coopérer avec le verrou (40) prévu sur une cassette (12) retenue par lesdits guides (30) pour libérer ainsi la deuxième paroi (32), un organe de retenue (46) rappelé vers une position située sur le trajet d'une cassette (12) retenue par lesdits guides (30) et destiné à maintenir la cassette hors de coopération avec l'organe de libération (52), et étant caractérisé en ce que les guides (30) sont disposés de façon à maintenir la cassette (12) inclinée d'un angle aigu par rapport à la verticale de sorte que sa deuxième paroi (32) soit située au-dessous de la première paroi (31), et en ce que ledit couvercle (22) et ledit organe de retenue (46) sont placés de façon que lorsque l'organe de retenue (46) vient initialement coopérer avec ladite cassette (12), ledit couvercle (22) ne soit pas complètement fermé mais puisse reposer contre ladite première extrémité (34) de la cassette (12) et que, lorsque le couvercle (22) se rapproche d'une position complètement fermée, il pousse le bord de tête de la cassette (12) en opposition à la force de rappel de l'organe de retenue (46) et pousse le verrou (40) contre l'organe de libération (52).

2. Dispositif de déchargement selon la revendication 1, caractérisé en ce que lesdits guides (30) contiennent une première paire de rainures espacées (30r) permettant de retenir par coulissement ladite cassette (12), en ce qu'il est prévu des deuxièmes guides (64) contenant une deuxième paire de rainures mutuellement écartées d'une distance inférieure à l'écartement desdites premières rainures et étant plus courtes que les premières rainures et s'étendant parallèlement à celles-ci à l'effet de retenir une cassette qui est plus courte et plus étroite qu'une cassette conçue pour s'adapter entre ladite première paire de rainures mais qui comporte un verrou similaire, en ce que ledit

5

organe de libération (52) est situé entre l'extrémité desdits premiers guides (30), et en ce qu'il est prévu un deuxième organe de libération (52) situé entre les extrémités desdits deuxièmes guides (64) et à une distance dudit couvercle (22) telle que lorsque ledit couvercle (22) se rapproche d'une position complètement fermée, il pousse le verrou (40) d'une cassette contre ledit deuxième organe de libération (52).

3. Dispositif de déchargement selon la revendication 2, caractérisé en ce qu'il comporte une trémie de réception de pellicule (58) située au-dessous desdits premiers et desdits deuxièmes guides (30, 64) à l'effet de recevoir une pellicule tombant d'une cassette placée sur lesdits premiers ou sur lesdits deuxièmes guides (30, 64), en ce qu'il comporte une paire de guides de bord de pellicule (82) situés de chaque côté desdits deuxièmes guides (64) à l'effet de guider une pellicule d'une cassette (12) située dans ceux-ci à ladite trémie de réception de pellicule (58), et en ce que lesdits guides de bord (82) peuvent pivoter entre de premières positions dans lesquelles ils sont situés entre lesdits premiers guides (30) et de secondes positions dans lesquelles lesdites portions sont situées en dehors d'une position comprise entre lesdits premiers guides (30).

0 000 139

FIG. 1

FIG. 2

FIG. 7

1

FIG. 3

FIG. 4

FIG. 5

FIG. 6